(19)

**Europäisches Patentamt**

**European Patent Office**

**Office européen des brevets**

(11) **EP 4 749 465 A1**

(12) **EUROPEAN PATENT APPLICATION**

(43) Date of publication:
27.05.2026 Bulletin 2026/22

(21) Application number: 25215563.5

(22) Date of filing: 13.11.2025

(51) International Patent Classification (IPC):
*G06F 11/34* (2006.01)

(52) Cooperative Patent Classification (CPC):
**G06F 11/3447; G06F 11/3409; G06F 11/3452**

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.11.2024 US 202463722881 P
08.09.2025 US 202519322114

(71) Applicant: **Google LLC**
**Mountain View, CA 94043 (US)**

(72) Inventors:
• **Nasr-Esfahany, Arash**
**Mountain View, 94043 (US)**
• **Alizadeh Attar, Mohammadreza**
**Lexington, 02420 (US)**
• **Lee, Victor W.**
**Santa Clara, 95051 (US)**
• **Alam, Hanna**
**6789141 Tel Aviv-Yafo (IL)**

• **Coon, Brett Warren**
**San Jose, 95138 (US)**
• **Culler, David Ethan**
**Mountain View, 94043 (US)**
• **Dadu, Vidushi**
**Mountain View, 94043 (US)**
• **Dixon, Martin Guy**
**Mountain View, 94043 (US)**
• **Levy, Henry Marc**
**Mountain View, 94043 (US)**
• **Pandey, Santosh**
**Piscataway, 08854 (US)**
• **Ranganathan, Parthasarathy**
**Mountain View, 94043 (US)**
• **Yazdanbakhsh, Amir**
**Mountain View, 94043 (US)**

(74) Representative: **Betten & Resch**
**Patent- und Rechtsanwälte PartGmbB**
**Maximiliansplatz 14**
**80333 München (DE)**

(54) **FAST AND ACCURATE PROCESSING ARCHITECTURE PERFORMANCE MODELING USING A FUSION OF ANALYTICAL AND MACHINE LEARNING MODELS**

(57) Estimating throughput for an input program executing on a processing architecture by calculating a plurality of cumulative distribution functions (CDFs) for each parameter of a plurality of parameters for describing processing architectures, the CDFs of the plurality of CDFs corresponding to respective ones of values for the parameter, and each CDF of the plurality of CDFs specifying a cumulative distribution of throughput calculations associated with the corresponding value and the input program, and the pluralities of CDFs generated for the parameters making up a set of pluralities of CDFs; and using the set of pluralities of CDFs and a machine learning model to estimate the throughput for the input program executing on the processing architecture based on a set of parameter values specifying the processing architecture.

FIG. 1

**Description**

**CROSS-REFERENCE TO RELATED APPLICATIONS**

The present application claims the benefit of the filing date of U.S. Provisional Application No. 63/722,881, filed on November 20, 2024, the disclosure of which is hereby incorporated herein by reference.

**BACKGROUND**

Performance modeling is a valuable tool for designers of computer architectures. Use of performance models, and architecture simulators in particular, allows architects to explore new designs and optimize existing ones without the prohibitive costs of fabrication. For example, a performance model may predict the throughput for an input program when the input program is executed on a specified architecture, with the throughput being expressed as an average number of central processing unit (CPU) clock cycles needed to execute a single instruction of the input program.

Two important considerations for users of a performance model are the speed at which the model can generate predictions and the accuracy of the model's predictions. However, model speed and model accuracy generally trade off against each other. For instance, analytical models may offer fast performance estimates using simplified mathematical representations of architectural components but potentially lead to inaccurate predictions and sub-optimal design choice. Cycle-level simulators provide high-fidelity results by meticulously modeling every cycle of execution but are computationally intensive and therefore quite slow. Sequence-to-sequence machine learning models estimate an input program's cycles per instruction (CPI) by estimating the latency of each instruction through the processing pipeline stages but have a computational cost that scales proportionally with the length of the instruction sequence. That is, for sequence-to-sequence models the big O complexity is O(L), where L is the instruction sequence length.

**BRIEF SUMMARY**

In view of prior performance models' tradeoffs between modeling speed and modeling accuracy, the presently disclosed technology is provided. The presently disclosed technology employs a hybrid approach to performance modeling, using both analytical techniques and a machine learning model to realize a performance model that is orders of magnitude faster than prior models and has an error that is within about 2% of the error of cycle-level simulators (when error is measured as the difference between each actual CPI and the corresponding estimate). Moreover, the performance model of the present technology has a complexity of O(1).

In one aspect, the presently disclosed technology provides a method of estimating throughput for an input program executing on a processing architecture, including calculating a plurality of cumulative distribution functions (CDFs) for each parameter of a plurality of parameters for describing processing architectures, the CDFs of the plurality of CDFs corresponding to respective ones of values for the parameter, and each CDF of the plurality of CDFs specifying a cumulative distribution of throughput calculations associated with the corresponding value and the input program, and the pluralities of CDFs generated for the parameters making up a set of pluralities of CDFs; and using the set of pluralities of CDFs and a machine learning model to estimate the throughput for the input program executing on the processing architecture by providing a set of parameter values specifying the processing architecture, selecting from the set of pluralities of CDFs a subset of CDFs, the CDFs in the subset respectively corresponding to the set of parameter values, passing the subset of CDFs to the machine learning model, and using the machine learning model to generate the estimate based on the subset of CDFs and the set of parameter values.

**BRIEF DESCRIPTION OF THE DRAWINGS**

The accompanying drawings are not intended to be drawn to scale. Also, for purposes of clarity not every component may be labeled in every drawing. In the drawings:

Fig. 1 is a block diagram of a system according to an embodiment for estimating throughput for an input program executing on a processing architecture.

Fig. 2 is a block diagram of a computing system for implementing the presently disclosed technology.

Fig. 3 is a block diagram representation of a generalized frontend of a processing architecture, including labels of parameters that may be used to describe the frontend.

Fig. 4 is a block diagram representation of a generalized backend of a processing architecture, including labels of parameters that may be used to describe the backend.

Fig. 5 is representation of the generalized backend of Fig. 4, illustrating how performance features are calculated for a parameter with an input program when no restrictions are placed on other considered parameters.

Fig. 6 is a graph representing nominal throughput calculation points for several illustrative parameters, the points for each parameter corresponding collectively to a single value for the parameter and respectively to instruction segments of an input program.

Fig. 7 is a graph of cumulative distribution functions (CDFs) corresponding to the points shown in Fig. 6, each CDF specifying the distribution of the points for one parameter of the Fig. 6 parameters and for the subject value of the one parameter.

Fig. 8 is a block diagram illustrating how the CDFs of Fig. 7 are generated and used according to an embodiment.

Fig. 9 is a graph of a CDF describing the distribution of throughput estimation errors when the present technology is used to estimate CPI for an input program executing on a processing architecture, with the actual CPIs being determined from execution traces and the errors between each actual CPI and the corresponding estimate being indicated as a percentage of the actual CPI.

## DETAILED DESCRIPTION

Examples of systems and methods are described herein. It should be understood that the words "example," "exemplary" and "illustrative" are used herein to mean "serving as an example, instance, or illustration." Any embodiment or feature described herein as being an "example," "exemplary" or "illustration" is not necessarily to be construed as preferred or advantageous over other embodiments or features. In the following description, reference is made to the accompanying figures, which form a part thereof. In the figures, similar symbols typically identify similar components, unless context dictates otherwise. Other embodiments may be utilized, and other changes may be made, without departing from the spirit or scope of the subject matter presented herein.

The example embodiments described herein are not meant to be limiting. It will be readily understood that the aspects of the present disclosure, as generally described herein, and illustrated in the figures, can be arranged, substituted, combined, separated, and designed in a wide variety of different configurations, all of which are explicitly contemplated herein.

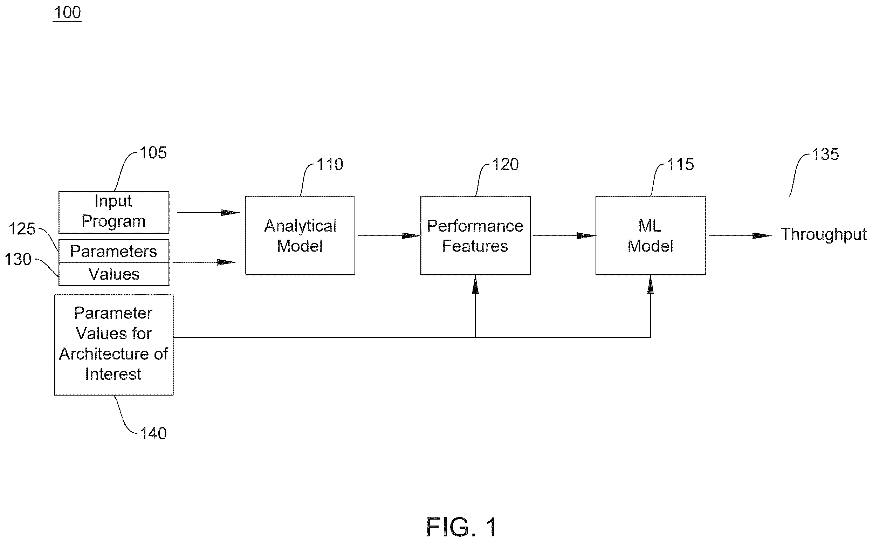

Turning now to Fig. 1, the figure is a block diagram of a system 100 according to an embodiment for estimating throughput for an input program 105 executing on a processing architecture. The system 100 includes an analytical model 110 and a machine learning model 115. The analytical model 110 calculates performance features for processing architectures that may execute the input program 105 and stores the performance features in a performance features dataset 120. To generate the performance features dataset 120, the analytical model 110 considers a multiple of parameters 125 describing the processing architectures, and for each such parameter, considers a list of possible parameter values 130. Each architecture is described by the parameters and corresponds to a unique combination of parameter values.

The performance features generated by the analytical model 110 are used by the machine learning model 115 to estimate a throughput 135 for the input program 105 executing on an architecture of interest. To estimate the throughput 135 for an architecture of interest, parameter values for the architecture of interest 140 are referenced for purposes of selecting from the performance features dataset 120 performance features corresponding to the architecture of interest. The parameter values for the architecture of interest 140 and the performance features corresponding to the architecture of interest are passed to the machine learning model 115, and the machine learning model 115 uses the parameter values for the architecture of interest 140 and the performance features corresponding to the architecture of interest to estimate the throughput 135 for the architecture of interest. For example, the machine learning model 115 estimates an average CPI for the input program 105 executing on the architecture of interest.

It should be noted that in some embodiments, the machine learning model 115 is a light-weight multi-layer perceptron (MLP) model with two hidden layers each having a dimensionality of 256. However, it should also be noted that the presently disclosed technology is not limited to a machine-learning model that is a light-weight MLP model with two hidden layers each having a dimensionality of 256, and that the wide range of machine learning models that can be used in the present technology will be readily apparent to one skilled in machine learning upon viewing this disclosure.

It should be further noted that while the terms "cycles per instruction (CPI)" and "instructions per cycle (IPC)" are selectively used in the present disclosure, the chosen term in any given context is merely for purposes of facilitating description and is not intended to limit the presently disclosed technology in any manner. Moreover, the terms CPI and IPC are used throughout the present disclosure merely as examples of throughput performance metrics, and the presently disclosed technology is not limited to estimating throughput in terms of any one performance metric. The wide range of performance metrics applicable with the presently disclosed technology will be readily apparent to one reviewing the present disclosure.

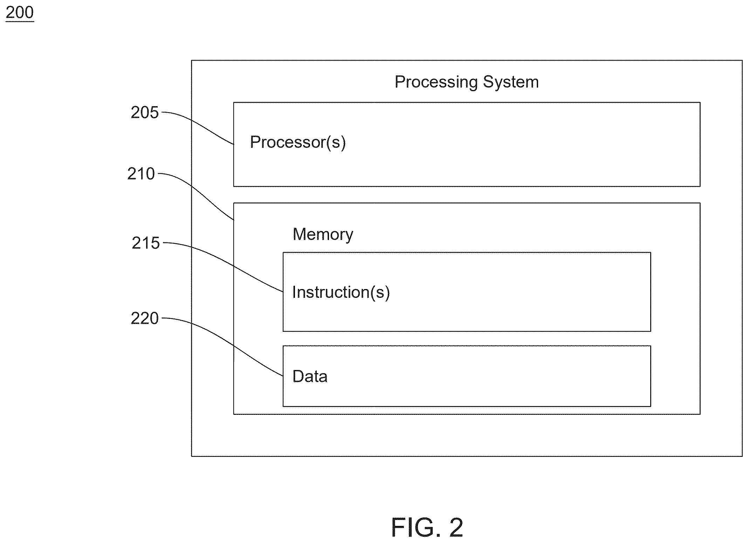

Referring now to Fig. 2, the figure is a block diagram of a computing system 200 for implementing the presently disclosed technology. The computing system 200 may include one or more processors 205 and a memory 210 for storing instructions 215 and data 220. In some embodiments, the computing system 200 may be a stand-alone computing device. In some other embodiments, the computing system 200 may be resident on a single computing device as one of a multiple of systems on the device, e.g., as a virtual machine on a device hosting a multiple of virtual machines. In still other embodiments, the computing system 200 may be resident on a cloud computing system or other distributed system, in which case the computing system 200 may be distributed across two or more different physical devices.

The presently disclosed technology may be implemented as one or more modules within system 200. Each module may be in the form of software, hardware, or a combination of software and hardware. For example, all the modules may take the form of software or computer program run on a single computing device making up the computing system 200, or one or more modules may take the form of software or computer program run on a first computing device making up computing system 200 while one or more other modules may take the form of software or computer program run on one or more other computing devices making up the computing system 200. As another example, each module may be software or computer program run on a separate one of multiple computing devices making up the computing system 200 such that there is one module per device. Moreover, any one of the modules may take the form of software or computer program run on more than one of multiple computing devices included in computing system 200. In an embodiment, the analytical model 110 and the machine learning model 115 may be implemented as respective modules within the computing system 200, with performance features dataset 120 being stored in a memory of system 200.

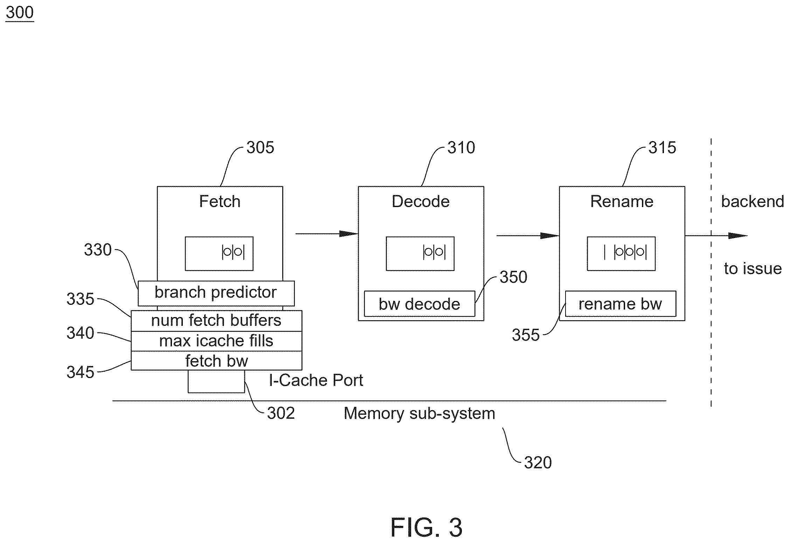

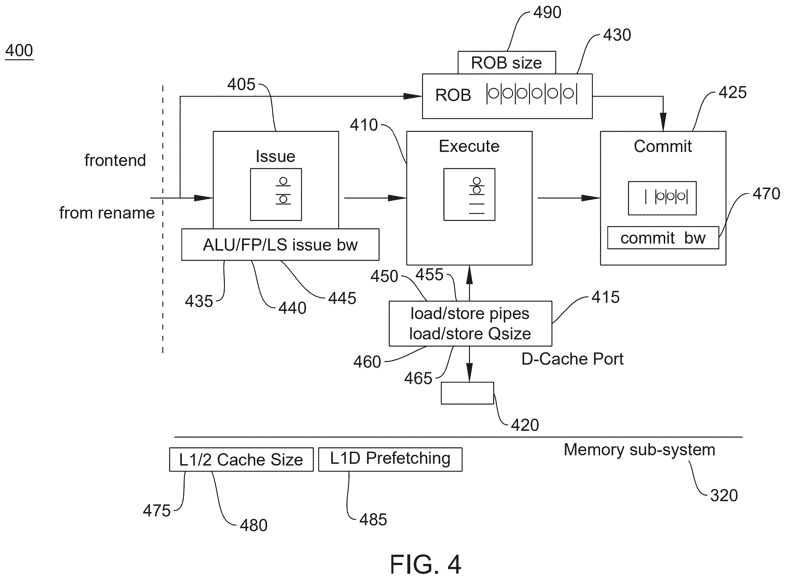

To illustrate the parameters considered by the system 100, reference is made to Figs. 3 and 4.

Fig. 3 is a block diagram representation of generalized frontend 300 of a processing architecture, including labels of parameters that may be used to describe the frontend 300. As can be seen from Fig. 3, the frontend 300 includes a fetch component 305, an instruction cache port component 302, a decode component 310, a rename component 315, and a memory sub-system component 320. Each of the components may take the form of distinct portions of the frontend 300, and each portion may take the form of hardware, software, or a combination of hardware and software. In general, the fetch component 305 functions to get instructions from an external memory (not shown) for execution by the architecture (e.g., a central processing unit (CPU)); the decode component 310 functions to convert the fetched instructions into a series of signals that the architecture can execute; the rename component 315 abstracts logical registers from physical registers to remove false data dependencies; and the memory sub-system component 320 manages communications between the architecture and the external memory.

As can be further seen from Fig. 3, various parameters may be used to describe components of the frontend 300. The depicted fetch component 305 parameters are a branch predictor parameter 330, a number of fetch buffers 335, a maximum number of instruction cache fills 340, and a fetch bandwidth 345. The depicted decode component 310 parameter is a decode bandwidth 350. And the depicted rename component 315 parameter is a rename bandwidth 355. Regarding the branch predictor parameter 330, the parameter represents a rate of branch misprediction. Two ways to provide the rate of branch misprediction are one, by employing a tagged geometric length predictor (TAGE) branch predictor to indirectly indicate the likelihood of a misprediction, or two, by employing a simple branch predictor that mispredicts branches at random with a pre-specified rate (e.g., 0%, 1%, ..., 100%). Nevertheless, it is noted that the TAGE branch predictor and simple branch predictor approaches to providing the rate of branch misprediction are provided by way of example only, and that other approaches to providing the rate of branch misprediction may be employed with the present technology.

Fig. 4 is a block diagram representation of generalized backend 400 of a processing architecture, including labels of parameters that may be used to describe the backend 400. The backend 400 may be part of the same processing architecture as the frontend 300. In any event, as can be seen from Fig. 4, the backend 400 includes an issue component 405, an execute component 410, a data cache port component 415, a data cache component 420, a commit component 425, and a reorder buffer (ROB) component 430. Also depicted in Fig. 4 is the memory sub-system component 320. As is the case in Fig. 3, each of the components in Fig. 4 may take the form of distinct portions of the backend 400, and each portion may take the form of hardware, software, or a combination of hardware and software. In general, the issue component 405 functions to organize and forward program instructions after their dependencies are met to the execute component 410; the execute component 410 functions to pass decoded information to the relevant functional units of the architecture to perform the actions required by instructions; the data cache port component 415 manages communications between the execute component 410 and the data cache component 420; the commit component 425 receives incoming instructions and permanently updates the state of the processing architecture based on instruction results; and the ROB component 430 allows instructions to be executed out of order while still maintaining the illusion of in-order execution by storing instruction results and committing them in the correct order.

As can be further seen from Fig. 4, various parameters may be used to describe components of the backend 400. The depicted issue component 405 parameters are an arithmetic logic unit issue bandwidth 435, a floating-point issue bandwidth 440, and a loadstore issue bandwidth 445. The depicted data cache port component 415 parameters are a load pipeline size 450, a store pipeline size 455, a load queue size 460, and a store queue size 465. The depicted commit component 425 parameter is a commit bandwidth 470. The depicted memory sub-system component 320 parameters are a level 1 data and instructions cache size 475, a level 2 data and instructions cache size 480, and a level 1 stride data prefetching degree 485. And the depicted parameter for the ROB component 430 is a ROB size 490.

Regarding the parameters depicted in Figs. 3 and 4, the following is a list of descriptions.

branch predictor 330 - a rate of branch misprediction

number of fetch buffers 335 - buffers for temporarily storing instructions that are fetched from memory

maximum number of instruction cache fills 340 - a limit on maximum number of outstanding instruction cache (icache) requests at any point in time

fetch bandwidth 345 - maximum number of instructions that can be fetched at every clock cycle

decode bandwidth 350 - maximum number of instructions that can be decoded at every clock cycle

rename bandwidth 355 - maximum number of instructions that can be renamed at every clock cycle

arithmetic logic unit issue bandwidth 435 - maximum number of ALU instructions that can be issued at every clock cycle

floating-point issue bandwidth 440 - maximum number of FP instructions that can be issued at every clock cycle

load-store issue bandwidth 445 - maximum number of LS instructions that can be issued at every clock cycle

load pipeline size 450 - maximum number of loads that can be executed at every clock cycle

loadstore pipeline size 455 - maximum number of loads+stores that can be executed at every clock cycle

load queue size 460 - size of the load queue in terms of number of load instructions store queue size 465 - size of the store queue in terms of number of store instructions commit bandwidth 470 - maximum number of instructions that can be committed at every clock cycle

level 1 data and instructions cache size 475 - size of level 1 cache (e.g., size in kB) level 2 data and instructions cache size 480 - size of level 2 cache (e.g., size in kB) level 1 stride data prefetching degree 485 - number of level one cache lines that will be prefetched based on detected stride pattern

reorder buffer size 490 - size of the reorder buffer in terms of number of instructions

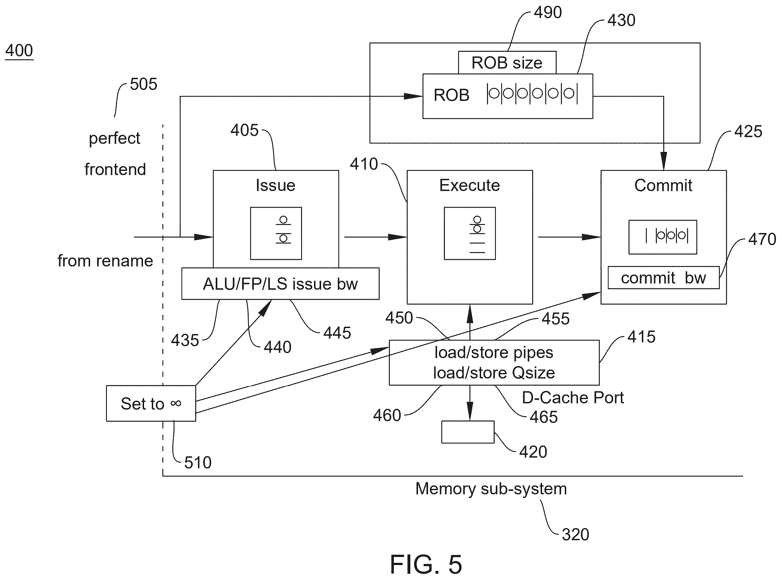

The Fig. 3 and Fig. 4 components and parameters may serve as the basis for the analytical model calculations of the presently disclosed technology. In accordance with embodiments, the analytical model calculations (e.g., calculations by analytical model 110) focus on one parameter at a time. That is, for each parameter the analytical model calculations are performed to determine performance features for the parameter, with an input program, when all of the other parameters are unrestricted in value. Such an analytical model calculation process is illustrated in Fig. 5.

Fig. 5 is representation of the generalized backend 400 of Fig. 4, illustrating how performance features are calculated for a parameter with an input program when no restrictions are placed on the other considered parameters. More specifically, Fig. 5 illustrates how performance features may be calculated for the ROB size 490 with input program 105 while all of the other parameters of the components in Figs. 3 and 4 are unrestricted (as denoted by indications 505 and 510). For example, for a given value of ROB size 490 and a segment of k instructions of the input program 105, a performance feature of ROB nominal throughput for the ROB size value and the segment may be calculated as follows.

$$a_i = c_{i-r} \qquad i \geqslant r$$

$$a_i = 0 \qquad i < r$$

$$s_i = \max(a_i, \max\{f_j \mid j \in \text{Children}(i)\})$$

$$f_i = RESP\_CYCLE(s_i, cache\_line(i), is\_mem(i))$$

$$c_i = \max(f_i, c_{i-1})$$

$$\text{thr}^n_{ROB} = k/(c_{ki-1} - c_{k(i-1)})$$

Where $\text{thr}^n_{ROB}$ denotes the ROB nominal throughput for the ROB size value over the $n^{th}$ segment of k consecutive instructions of the input program 105, $i$ is an integer from 1 to k denoting the $i^{th}$ instruction of a segment, $r$ is the ROB size value, Children(i) are the $i^{th}$ instruction's immediate dependencies that are determined from trace-analysis, $a_i$ is the $i^{th}$ instruction's arrival cycle to the ROB component 430, $s_i$ the $i^{th}$ instruction's start of execution cycle, $f_i$ is the $i^{th}$ instruction's execution finish cycle, and $c_i$ is the $i^{th}$ instruction's commit cycle. $RESP\_CYCLE$ is a function that returns the finish cycle. For non-memory instructions, the finish cycle for an instruction is calculated from the start cycle of the instruction plus the execution time of the instruction from trace analysis. For load instructions, some corrections are made according to a simple trace-driven memory model to make execution times more accurate.

The illustrated calculation may be repeated for multiple segments, or all segments, of the input program to generate corresponding multiple ROB nominal throughputs $thr^n_{ROB}$. As such, the ROB nominal throughputs for the given value of ROB size 490 define a nominal throughput group that represents a performance feature. One way to express the performance feature is through a cumulative distribution function (CDF), which specifies a cumulative distribution of the nominal throughput group associated with the corresponding value of ROB size 490. Further, the process of generating a nominal throughput group may be repeated for each of the values of ROB size 490 under consideration to generate a plurality of nominal throughput groups for ROB size 490 and a corresponding plurality of CDFs for the nominal throughput groups, so that each CDF of the plurality of CDFs specifies a cumulative distribution of the nominal throughputs in the corresponding nominal throughput group and defines a performance feature for the corresponding value of ROB size 490.

In a similar manner, a plurality of CDFs may be generated for each of the parameters shown in Figs. 3 and 4. The pluralities of CDFs so generated form a set of pluralities of CDFs representing performance features for the parameters and the input program 105. The set of CDFs may then be used by the machine learning model (e.g., machine learning model 115) to estimate a throughput for the input program 105 executing on a specified architecture of interest, the architecture of interest being defined by providing a single value for each of the parameters.

It should be noted that the analytical modeling of the presently disclosed technology is much quicker than the analytical modeling of prior technology. The analytical modeling of the present technology works quickly because it considers the performance constraints imposed by the architecture parameters - in combination with the input program - one parameter at a time. In this manner, the analytical modeling of the present technology does not need to perform the complex calculations necessary to assess the web of effects that the parameters impose on each other during program execution. Moreover, employing the analytical model of the present technology to generate performance features for use by the machine learning model of the technology frees the machine learning model from having to operate on sequences of instructions, further increasing the speed at which the technology generates performance estimations. The machine learning model of the present technology learns the complex interactions between the parameters that have been modeled in isolation by the analytical model of the presently disclosed technology, so that the interactions are accounted for without the need for resource-consuming analytical model calculations.

Aspects of the presently disclosed technology will now be described in additional detail.

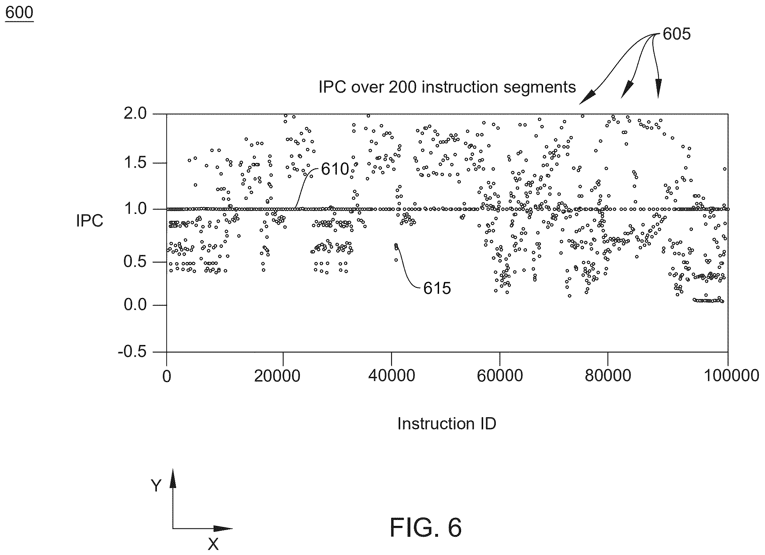

Turning now to Fig. 6, the figure is a graph 600 representing nominal throughput calculation points 605 for several illustrative parameters. The points for each parameter correspond collectively to a single value for the parameter and respectively to instruction segments of an input program. The segment size is 200 instructions. The Y axis of the graph 600 represents nominal throughput in units of instructions per cycle (IPC). The X axis of the graph 600 represents instruction IDs for the input program (e.g., input program 105). The horizontal line 610 in the graph 600 indicates the maximum number of instructions that may be committed per cycle, 1.0 in the depicted case. By way of example, nominal throughput calculation point 615 is a point representing the nominal throughput calculated for a given value of ROB size (e.g., ROB size 490) for an instruction segment that occurs at approximately instruction ID 4000 of the input program.

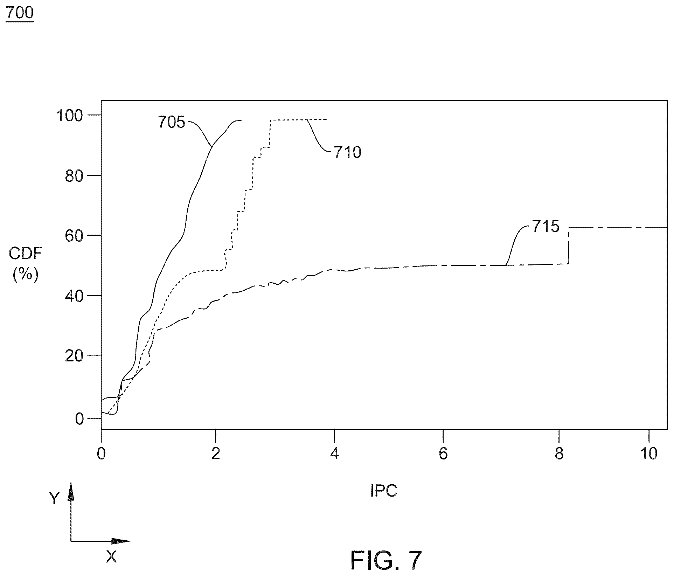

Fig. 7 is a graph 700 of CDFs corresponding to the points shown in Fig. 6. Each of the CDFs shown in Fig. 7 specifies the distribution of the points for one parameter of the Fig. 6 parameters and for the subject value of the one parameter. The Y axis of the graph 700 represents cumulative distribution function values in units of percentage. The X axis of the graph 700 represents nominal throughput in units of IPC. The CDFs depicted are a CDF 705 for a value of ROB size (e.g., ROB size 490) and the input program (e.g., input program 105), a CDF 710 for a value of load queue size (e.g., load queue size 460) and the input program (e.g., input program 105), and a CDF 715 for a value of store queue size (e.g., store queue size 465) and the input program (e.g., input program 105).

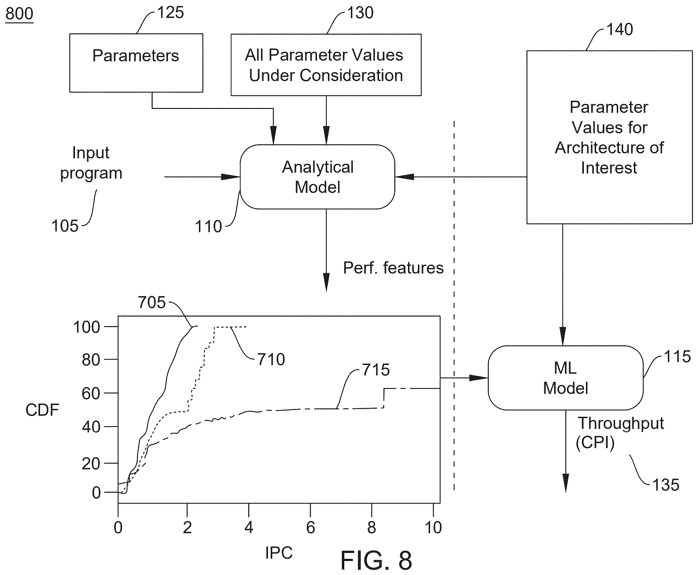

Fig. 8 is a block diagram illustrating how the CDFs of Fig. 7 are generated and used according to an embodiment. As can be seen from Fig. 8, the analytical model 110 receives the input program 105, a list of a multiple of parameters 125 used for describing various processing architectures, and all parameter values under consideration 130 (i.e., all values under consideration for each of the multiple of parameters 125). The parameter values under consideration 130 cover all of processing architectures under consideration as each combination of parameter values defines a point in the architectural space defined by the multiple of parameters 125.

Based on the list of the multiple of parameters 125 and the parameter values under consideration 130, the analytical model calculates a plurality of CDFs for each parameter. For each parameter, the CDFs of the plurality of CDFs correspond to respective ones of values for the parameter, and each CDF of the plurality of CDFs specifies a cumulative distribution of throughput calculations associated with the corresponding value - in combination with the input program. Further, the pluralities of CDFs generated for the parameters make up a set of pluralities of CDFs. In the depicted illustration, the parameters include ROB size 490, load queue size 460, and store queue size 465, and thus the set of pluralities of CDFs include a plurality of CDFs corresponding to ROB size 490, a plurality of CDFs corresponding to load queue size 460, and a plurality of CDFs corresponding to store queue size 465.

As can be further seen from Fig. 8, the analytical model 110 is provided with parameter values for the architecture of interest 140. The parameter values for the architecture of interest 140 include, by way of example only, a value of ROB size 490, a value of load queue size 460, and a value of store queue size 465. Upon receipt of the parameter values for ROB size 490, load queue size 460, and store queue size 465, the CDFs corresponding to the values are fed to the machine learning model 115. For instance, CDFs 705, 710, and 715 are fed to the machine learning model 115, and the machine learning model 115 then uses the CDFs 705, 710, and 715 - along with any other CDFs applicable to supplied parameter values for the architecture of interest 140 - to estimate the throughput 135 for the input program 105 executing on the processing architecture of interest.

The presently disclosed technology provides for fast and accurate performance modeling of processing architectures. Regarding speed, it is estimated that the present technology can generate a performance estimate for an input program on a given processing architecture at a speed that is $10^5$ times faster than the speed at which a cycle-level simulator can generate a performance estimate for the same input program and processing architecture. According to the presently disclosed technology, the calculation of the performance features can be performed offline, and therefore at simulation time the performance features corresponding to the architecture of interest are simply fed to the machine learning model, which then takes about 200 micro-seconds to compute the estimated throughput. Moreover, once the performance features (e.g., the set of pluralities of CDFs) are calculated for the parameters under consideration, big O complexity for the presently disclosed performance modeling is O(1) since there is a fixed number of performance features that is independent of the length of the input program, and the remaining operations are uniform and are performed on the predetermined number of pre-calculated performance features.

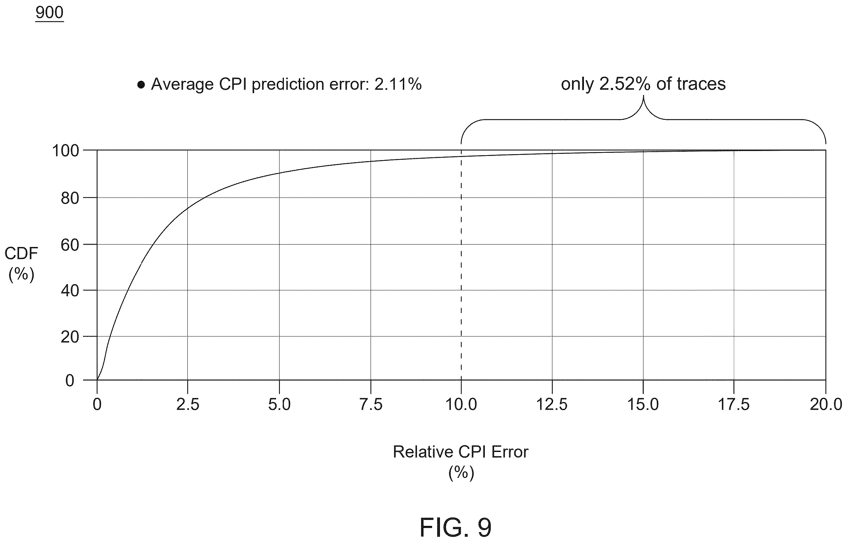

Regarding the accuracy of performance estimates using the present technology, reference is made to Fig. 9. Fig. 9 is a graph 900 of a CDF describing the distribution of CPI estimation errors when the present technology is used to estimate CPI for an input program executing on a processing architecture, with the actual being determined from execution traces and the errors between each actual CPI and the corresponding estimate being indicated as a percentage of the actual CPI. As can be seen from the graph 900, the average relative CPI estimation error for the present technology was found to be 2.11%. Further, it was found that the average relative throughput estimation error was 10.0% or higher at a rate of 2.52%. To generate the graph 900 of Fig. 9, the considered dataset included 90,000 random unseen program regions with length of 100,000 instructions from a diverse set of workloads. For every program region, a random architecture was sampled via parameters and the architecture was run through a reference simulator to get a CPI label. The present technology was applied to the same program region and architecture to generate an estimated CPI. The relative estimation error was then calculated as |estimated_CPI - label_CPI|/ label_CPI * 100. The graph 900 shows the cumulative distribution of such errors over the entire 90,000 datapoints.

Embodiments of the present technology include, but are not restricted to, the following.

(1) A method of estimating throughput for an input program executing on a processing architecture, including calculating a plurality of cumulative distribution functions (CDFs) for each parameter of a plurality of parameters for describing processing architectures, the CDFs of the plurality of CDFs corresponding to respective ones of values for the parameter, and each CDF of the plurality of CDFs specifying a cumulative distribution of throughput calculations associated with the corresponding value and the input program, and the pluralities of CDFs generated for the parameters making up a set of pluralities of CDFs; and using the set of pluralities of CDFs and a machine learning model to estimate the throughput for the input program executing on the processing architecture by providing a set of parameter values specifying the processing architecture, selecting from the set of pluralities of CDFs a subset of CDFs, the CDFs in the subset respectively corresponding to the set of parameter values, passing the subset of CDFs to the machine learning model, and using the machine learning model to generate the estimate based on the subset of CDFs and the set of parameter values.

(2) The method according to (1), further including determining the plurality of parameters.

(3) The method according to (1), wherein the machine learning model includes a light-weight multi-layer perceptron (MLP) model with two hidden layers each having a dimensionality of 256.

(4) The method according to (1), wherein the step of calculating includes, for each of the parameters, (i) calculating a nominal throughput for a segment of the input program by using an analytical model with all others of the parameters being unrestricted in value, (ii) repeating the calculating for additional segments of the input program to generate a plurality of additional nominal throughputs, the nominal throughput and the additional nominal throughputs making up a nominal throughput group, (iii) performing steps (i) and (ii) for each of the values for the parameter to generate a plurality of nominal throughput groups, and (iv) generating the plurality of cumulative distribution functions (CDFs), the CDFs of the plurality of CDFs respectively corresponding to the nominal throughput groups, and each CDF of the plurality of CDFs specifying a cumulative distribution of the nominal throughputs in the corresponding nominal throughput group.

(5) The method according to (4), wherein the analytical model includes one or more equations.

(6) The method according to (4), wherein the machine learning model includes a light-weight multi-layer perceptron (MLP) model with two hidden layers each having a dimensionality of 256.

(7) The method according to (1), wherein the set of pluralities of CDFs are stored in a dataset, and passing the subset of CDFs to the machine learning model includes retrieving the subset of CDFs from the dataset and feeding the retrieved subset of CDFs to the machine learning model.

(8) The method according to (1), wherein the parameters include at least one of a branch predictor, a number of fetch buffers, a maximum number of instruction cache fills, a fetch bandwidth, a decode bandwidth, a rename bandwidth, an arithmetic logic unit issue bandwidth, a floating-point issue bandwidth, a load-store issue bandwidth, a load pipe size, a loadstore pipe size, a load queue size, a store queue size, a commit bandwidth, a level 1 data and instructions cache size, a level 2 data and instructions cache size, a level 1 stride data prefetching degree, and a reorder buffer size.

(9) A system for estimating throughput for an input program executing on a processing architecture, including an analytical model for calculating a plurality of cumulative distribution functions (CDFs) for each parameter of a plurality of parameters for describing processing architectures, the CDFs of the plurality of CDFs corresponding to respective ones of values for the parameter, and each CDF of the plurality of CDFs specifying a cumulative distribution of throughput calculations associated with the corresponding value and the input program, and the pluralities of CDFs generated for the parameters making up a set of pluralities of CDFs; and a machine learning model for using a subset of CDFs selected from the set of pluralities of CDFs to generate an estimate of the throughput for the input program executing on the processing architecture, the subset of CDFs being selected according to a set of parameter values specifying the processing architecture such that the CDFs in the subset respectively correspond to the set of parameter values.

(10) The system according to (9), wherein the machine learning model includes a light-weight multi-layer perceptron (MLP) model with two hidden layers each having a dimensionality of 256.

(11) The system according to (9), wherein calculating the plurality of CDFs includes for each of the parameters (i) calculating a nominal throughput for a segment of the input program with all others of the parameters being unrestricted in value, (ii) repeating the calculating for additional segments of the input program to generate a plurality of additional nominal throughputs, the nominal throughput and the additional nominal throughputs making up a nominal throughput group, (iii) performing steps (i) and (ii) for each of the values for the parameter to generate a plurality of nominal throughput groups, and (iv) generating the plurality of cumulative distribution functions (CDFs), the CDFs of the plurality of CDFs respectively corresponding to the nominal throughput groups, and each CDF of the plurality of CDFs specifying a cumulative distribution of the nominal throughputs in the corresponding nominal throughput group.

(12) The system according to (11), wherein the analytical model implements one or more equations.

(13) The system according to (11), wherein the machine learning model includes a light-weight multi-layer perceptron (MLP) model with two hidden layers each having a dimensionality of 256.

(14) The system according to (9), further including a dataset for storing the set of pluralities of CDFs, and wherein the machine learning model receives the subset of CDFs as provided by the dataset.

(15) The system according to (9), wherein the parameters include at least one of a branch predictor, a number of fetch buffers, a maximum number of instruction cache fills, a fetch bandwidth, a decode bandwidth, a rename bandwidth, an arithmetic logic unit issue bandwidth, a floating-point issue bandwidth, a load-store issue bandwidth, a load pipe size, a loadstore pipe size, a load queue size, a store queue size, a commit bandwidth, a level 1 data and instructions cache size, a level 2 data and instructions cache size, a level 1 stride data prefetching degree, and a reorder buffer size.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description should be taken by way of illustration rather than by way of limitation of the subject matter defined by the claims.

**Claims**

1. A method of estimating throughput for an input program executing on a processing architecture, comprising:

   calculating a plurality of cumulative distribution functions (CDFs) for each parameter of a plurality of parameters for describing processing architectures, the CDFs of the plurality of CDFs corresponding to respective ones of values for the parameter, and each CDF of the plurality of CDFs specifying a cumulative distribution of throughput calculations associated with the corresponding value and the input program, and the pluralities of CDFs generated for the parameters making up a set of pluralities of CDFs; and
   using the set of pluralities of CDFs and a machine learning model to estimate the throughput for the input program executing on the processing architecture by providing a set of parameter values specifying the processing architecture, selecting from the set of pluralities of CDFs a subset of CDFs, the CDFs in the subset respectively corresponding to the set of parameter values, passing the subset of CDFs to the machine learning model, and using the machine learning model to generate the estimate based on the subset of CDFs and the set of parameter values.

2. The method according to claim 1, further comprising determining the plurality of parameters.

3. The method according to claim 1 or claim 2, wherein the machine learning model comprises a light-weight multi-layer perceptron (MLP) model with two hidden layers each having a dimensionality of 256.

4. The method according to any one of the preceding claims, wherein the step of calculating comprises:

   for each of the parameters

   (i) calculating a nominal throughput for a segment of the input program by using an analytical model with all others of the parameters being unrestricted in value,
   (ii) repeating the calculating for additional segments of the input program to generate a plurality of additional nominal throughputs, the nominal throughput and the additional nominal throughputs making up a nominal throughput group,
   (iii) performing steps (i) and (ii) for each of the values for the parameter to generate a plurality of nominal throughput groups, and
   (iv) generating the plurality of cumulative distribution functions (CDFs), the CDFs of the plurality of CDFs respectively corresponding to the nominal throughput groups, and each CDF of the plurality of CDFs specifying a cumulative distribution of the nominal throughputs in the corresponding nominal throughput group.

5. The method according to claim 4, wherein the analytical model comprises one or more equations.

6. The method according to claim 4 or claim 5, wherein the machine learning model comprises a light-weight multi-layer perceptron (MLP) model with two hidden layers each having a dimensionality of 256.

7. The method according to any one of the preceding claims, wherein the set of pluralities of CDFs are stored in a dataset, and passing the subset of CDFs to the machine learning model comprises retrieving the subset of CDFs from the dataset and feeding the retrieved subset of CDFs to the machine learning model.

8. The method according to any one of the preceding claims, wherein the parameters comprise at least one of a branch predictor, a number of fetch buffers, a maximum number of instruction cache fills, a fetch bandwidth, a decode bandwidth, a rename bandwidth, an arithmetic logic unit issue bandwidth, a floating-point issue bandwidth, a load-store issue bandwidth, a load pipe size, a loadstore pipe size, a load queue size, a store queue size, a commit bandwidth, a level 1 data and instructions cache size, a level 2 data and instructions cache size, a level 1 stride data prefetching degree, and a reorder buffer size.

9. A system for estimating throughput for an input program executing on a processing architecture, comprising:

   an analytical model for calculating a plurality of cumulative distribution functions (CDFs) for each parameter of a plurality of parameters for describing processing architectures, the CDFs of the plurality of CDFs corresponding to respective ones of values for the parameter, and each CDF of the plurality of CDFs specifying a cumulative distribution of throughput calculations associated with the corresponding value and the input program, and the pluralities of CDFs generated for the parameters making up a set of pluralities of CDFs; and
   a machine learning model for using a subset of CDFs selected from the set of pluralities of CDFs to generate an estimate of the throughput for the input program executing on the processing architecture, the subset of CDFs being selected according to a set of parameter values specifying the processing architecture such that the CDFs in the subset respectively correspond to the set of parameter values.

10. The system according to claim 9, wherein the machine learning model comprises a light-weight multi-layer perceptron (MLP) model with two hidden layers each having a dimensionality of 256.

11. The system according to claim 9 or claim 10, wherein calculating the plurality of CDFs comprises:
    for each of the parameters

    (i) calculating a nominal throughput for a segment of the input program with all others of the parameters being unrestricted in value,
    (ii) repeating the calculating for additional segments of the input program to generate a plurality of additional nominal throughputs, the nominal throughput and the additional nominal throughputs making up a nominal throughput group,

(iii) performing steps (i) and (ii) for each of the values for the parameter to generate a plurality of nominal throughput groups, and

(iv) generating the plurality of cumulative distribution functions (CDFs), the CDFs of the plurality of CDFs respectively corresponding to the nominal throughput groups, and each CDF of the plurality of CDFs specifying a cumulative distribution of the nominal throughputs in the corresponding nominal throughput group.

12. The system according to claim 11, wherein the analytical model implements one or more equations; and/or wherein the machine learning model comprises a light-weight multi-layer perceptron (MLP) model with two hidden layers each having a dimensionality of 256.

13. The system according to any one of claims 9 to 12, further comprising a dataset for storing the set of pluralities of CDFs, and wherein the machine learning model receives the subset of CDFs as provided by the dataset.

14. The system according to any one of claims 9 to 13, wherein the parameters comprise at least one of a branch predictor, a number of fetch buffers, a maximum number of instruction cache fills, a fetch bandwidth, a decode bandwidth, a rename bandwidth, an arithmetic logic unit issue bandwidth, a floating-point issue bandwidth, a load-store issue bandwidth, a load pipe size, a loadstore pipe size, a load queue size, a store queue size, a commit bandwidth, a level 1 data and instructions cache size, a level 2 data and instructions cache size, a level 1 stride data prefetching degree, and a reorder buffer size

15. A computer program comprising instructions that, when executed by one or more processors, causes the one or more processors to perform the method according to any one of claims 1 to 8.

EP 4 749 465 A1

100

FIG. 1

EP 4 749 465 A1

200

```
Processing System

  205 ── Processor(s)

  210 ── Memory

    215 ── Instruction(s)

    220 ── Data
```

FIG. 2

FIG. 3

300

FIG. 4

FIG. 5

FIG. 6

EP 4 749 465 A1

700

FIG. 7

FIG. 8

900

FIG. 9

# EUROPEAN SEARCH REPORT

**Application Number**

EP 25 21 5563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2020/167259 A1 (CANNATA PHILIP EUGENE [US]) 28 May 2020 (2020-05-28) * the whole document * * abstract * * paragraph [0034] * * paragraph [0030] * * paragraph [0037] * ----- | 1-15 | INV. G06F11/34 |
| A | US 2022/244954 A1 (KIM JASON [US] ET AL) 4 August 2022 (2022-08-04) * the whole document * * abstract * ----- | 1-15 | |

**TECHNICAL FIELDS SEARCHED (IPC)**

G06F

The present search report has been drawn up for all claims

| Place of search | Date of completion of the search | Examiner |
|---|---|---|
| Munich | 27 March 2026 | Iannuzzi, Silvia |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons
...........................................................................
& : member of the same patent family, corresponding
　　document

EPO FORM 1503 03.82 (P04C01)

## ANNEX TO THE EUROPEAN SEARCH REPORT
## ON EUROPEAN PATENT APPLICATION NO.

EP 25 21 5563

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | Publication date | Patent family member(s) | Publication date |
|---|---|---|---|
| US 2020167259 A1 | 28-05-2020 | US 2020167259 A1<br>US 2024118987 A1 | 28-05-2020<br>11-04-2024 |
| US 2022244954 A1 | 04-08-2022 | US 11269627 B1<br>US 2022244954 A1<br>US 2023251860 A1 | 08-03-2022<br>04-08-2022<br>10-08-2023 |

EPO FORM P0459

For more details about this annex : see Official Journal of the European Patent Office, No. 12/82

REFERENCES CITED IN THE DESCRIPTION

**Patent documents cited in the description**

- US 63722881